# EUROPÄISCHE PATENTANMELDUNG

(11) **EP 4 711 093 A1**
(43) Veröffentlichungstag der Anmeldung: **18.03.2026**
(21) Anmeldenummer: 24200007.3
(22) Anmeldetag: 12.09.2024
(51) Int. Cl.: B25J 9/00, A61H 1/02

(54) **FINGEREXOSKELETT-ENDGLIED, FINGEREXOSKELETT UND SET**

(71) Anmelder: Digity GmbH, 37077 Göttingen (DE)
(72) Erfinder: Bravo Cabrera, Miguel Angel, 37075 Göttingen (DE); Beyer,, Constantin, 37081 Göttingen (DE)
(74) Vertreter: REHBERG HÜPPE + PARTNER

(57) **Zusammenfassung**

Die Erfindung betrifft ein Fingerexoskelett-Endglied (4). Das Fingerexoskelett-Endglied (4) weist eine Stützstruktur (11) und eine Taststruktur (12) auf, die vorzugsweise lösbar miteinander montiert sind. Die Taststruktur (12) weist einen Fingerspitzenabschnitt (26) auf, welcher in proximaler Richtung an einem vorderen Endbereich (20) eines Nagelbettabschnitts (13) der Stützstruktur (11) abgestützt ist.

## Beschreibung

### TECHNISCHES GEBIET DER ERFINDUNG

Die Erfindung betrifft das technische Gebiet von Finger-Exoskeletten, bei denen es sich um eine an einem Finger getragene mechanische äußere Stützstruktur handelt, die bedarfsgerecht angelegt und entfernt werden kann. Bei dem Finger-Exoskelett kann es sich um
- ein aktives Finger-Exoskelett mit einem (insbesondere elektrischen) Aktuator,
- ein passives Finger-Exoskelett ohne Aktuator,
handeln, wobei aber in einigen Fällen auch eine Feder und/oder eine integral ausgebildete Elastizität eine Gleichgewichtslagen-Betriebsstellung des Finger-Exoskeletts vorgeben kann, aus der unter Beaufschlagung der Feder oder der integral ausgebildeten Elastizität durch von dem Finger aufgebrachte Kräfte das Finger-Exoskelett bewegbar ist, wobei dann eine Bewegung zurück in Richtung der Gleichgewichtlagen-Betriebsstellung durch die Feder oder die integrale Elastizität herbeigeführt oder unterstützt werden kann.

Das Finger-Exoskelett kann medizinischen oder therapeutischen Zwecken dienen und auch als Finger-Orthese ausgebildet sein. Möglich ist auch, dass das Finger-Exoskelett Bewegungen des Fingers unterstützen, führen und/oder verstärken kann und/oder Fingerglieder und/oder Gelenke des Fingers entlasten kann und/oder gegenüber Verletzungen oder Reizungen schützen kann.

Ein mögliches weiteres bereites Anwendungsgebiet eines Finger-Exoskelett ist die Unterstützung eines Monteurs während einer Montage.

Das Finger-Exoskelett kann für einen beliebigen Finger einschließlich des Daumens einsetzbar sein.

Die vorliegende Erfindung betrifft ein Fingerexoskelett-Endglied für ein Fingerexoskelett, wie dies zuvor beschrieben worden ist, ein mit einem derartigen Fingerexoskelett-Endglied gebildetes Fingerexoskelett sowie ein Set mit einem derartigemn Fingerexoskelett-Endglied.

### STAND DER TECHNIK

Das Unternehmen Otto Bock SE & Co. KGaA vertreibt unter Kennzeichnung "paexo thumb" ein Daumenexoskelett, vgl.:
https://ottobockexoskeletons.com/paexo-thumb-new
(Datum der Einsichtnahme: 03.09.2024).

Das Daumenexoskelett verfügt über einen Daumenexoskelett-Endglied, in dem das Daumenendglied (phalanx distalis) aufgenommen ist. Das erste Daumenglied (phalanx proximalis) ist in einem zweiten Daumenexosklett-Glied aufgenommen. Die beiden Daumenexoskelett-Glieder sind über Koppelstreben miteinander verbunden, die auf beiden Seiten des Daumens angeordnet und gekröpft sind. Die volle Beweglichkeit des Daumenendgelenkes soll durch die Elastizität und Formgebung der Koppelstreben erhalten bleiben, wobei die Koppelstreben eine Art Scharniergelenk bilden. Um die Daumenkuppe des Daumenendglieds vor mechanischen Einwirkungen zu schützen, deckt das Daumenexoskelett-Endglied die Daumenkuppe im Bereich der Stirnseite und der Unterseite ab. Die Aufnahme des Daumenendglieds mit der Daumenkuppe in dem Daumenexoskelett-Endglied ist dabei vergleichbar mit einem Fingerhut. Das Daumenexoskelett-Endglied verfügt auf der Unterseite über einen Abstützring. Das Daumenexoskelett soll den Daumen und insbesondere das Daumenendgelenk und das Daumensattelgelenk durch Ableitung von Kräften in die gesamte Hand entlasten. Das Daumenexoskelett findet Einsatz zum Klipsen, Stecken oder Stopfen in der Montage. Das Daumenexoskelett kann auch unter einem Handschuh getragen werden. Das Daumenexoskelett ist in unterschiedlichen Größen verfügbar und ermöglicht infolge einer Elastizität der Aufnahmeöffnungen der Daumenexoskelett-Glieder für die Daumenglieder ein schnelles An- und Ablegen.

Eine grundsätzlich entsprechende Ausführungsform ist aus US 2021/0267782 A1 bekannt, wobei hier ergänzend die Möglichkeit angesprochen ist, dass die gekröpften Koppelstreben auf beiden Seiten des Daumens auch eine Begrenzung des Schwenkwinkels des Daumenendgelenks gewährleisten können. Des Weiteren schlägt US 2021/0267782 A1 vor, dass an dem Daumenexoskelett-Endglied stirnseitig ein Werkzeug montiert oder ausgebildet sein kann, bei dem es sich um einen Kabelverbindungshalter, ein Schraubwerkzeug, einen Schraubenschlüssel, eine Anpresshilfe u. ä. handeln kann. Gemäß US 2021/0267782 A1 kann eine Fertigung der Komponenten des Daumenexoskeletts mittels 3D-Drucks, mit einem Spritzgießverfahren oder in einem Laminierverfahren erfolgen.

US 2021/022899 A1 offenbart eine Fingerorthese mit zwei oder drei über Gelenke miteinander verbundenen Fingerorthesen-Gliedern. Die Fingerorthesen-Glieder verfügen beidseits des Fingers über nach außen orientierte, eine Schwenkachse vorgebende Schwenkzapfen, die aufgenommen sind in entsprechend geformten Lageraugen des benachbarten Fingerorthesen-Glieds. Zur Vermeidung eines Hyperextension verfügt ein Fingerorthesen-Glied benachbart dem Schwenkzapfen über einen lateral nach außen orientierten Fortsatz, welcher zur Begrenzung des Schwenkwinkels in der Art eines Anschlages in Kontakt kommt mit einem Anschlag des benachbarten Fingerorthesen-Glieds.

Ein weiteres Daumenexoskelett, dessen Bewegungsfreiheitsgrade durch die Elastizität des eingesetzten Materials gewährleistet werden, ist aus der Website
https://exo.iturri.com/de/prexer-de
(Datum der Einsichtnahme 03.09.2024)
bekannt.

Die Website
https://www.ruck-produkte.de/produkt-infos
(Datum der Einsichtnahme 03.09.2024)
offenbart die Verbindung von zwei Fingerorthesen-Gliedern einer Fingerorthese mittels einer metallischen Spiralfeder, deren Federfußpunkte jeweils mit einem Fingerorthesen-Glied fest verbunden sind.

Die nicht vorveröffentlichte Patentanmeldung des Erfinders der vorliegenden Patentanmeldung DE 10 2023 124 508.2 widmet sich der Aufgabe, bei bekannten Fingerorthesen die Haptik oder taktile Wahrnehmung des Fingers, an welchem das Fingerexoskelett angeordnet ist, zu verbessern. Zu diesem Zweck verfügt ein Fingerexoskelett-Endglied über eine Fingerhut-förmige steife Stützstruktur, die das Fingerendglied vollständig, als sowohl im Bereich des Nagelbetts als auch im Bereich der Fingerkuppe, einschließt. Im Inneren der Stützstruktur ist ein großflächiger Grundkörper einer Taststruktur sandwichartig zwischen dem Fingerendglied und der Stützstruktur angeordnet. Die Stützstruktur verfügt im Bereich der Fingerkuppe auf der Unterseite und in den lateralen Seitenbereichen sowie im Bereich der Stirnseite über Durchgangsausnehmungen. Durch diese Durchgangsausnehmungen erstrecken sich von dem Grundkörper der Taststruktur ausgehende Fortsätze der Taststruktur, die über die Außenseite der Stützstruktur hervorstehen. Die außenliegenden Stirnseiten der Fortsätze bilden Sensorelemente, da bei einer Applikation einer Kraft auf diese Stirnseite der Fortsätze, beispielsweise beim Greifen eines Gegenstandes, die Fortsätze relativ zu der Stützstruktur nach innen bewegt werden, womit der Grundkörper der Taststruktur gegen die Fingerkuppe des Fingerendgliedes gedrückt wird, was eine haptische oder taktile Wahrnehmung ermöglichen soll. Eine Sicherung der Taststruktur in der Stützstruktur erfolgt dadurch, dass auf lateral gegenüberliegenden Seiten der Taststruktur zwei laterale Fortsätze angeordnet sind, die unter elastischer Verformung der Taststruktur in laterale Ausnehmungen der Stützstruktur eingesetzt werden können. Die elastische Rückstellkraft der Taststruktur hält die lateralen Fortsätze des Taststruktur in der Stützstruktur.

### AUFGABE DER ERFINDUNG

Der vorliegenden Erfindung liegt die Aufgabe zugrunde, ein Fingerexoskelett-Endglied, ein Fingerexoskelett und ein Set mit einem Exoskelett-Endglied vorzuschlagen, welches insbesondere verbessert ist hinsichtlich
- einer Kopplung einer Stützstruktur mit einer Taststruktur und/oder
- der haptischen oder taktilen Wahrnehmung und/oder
- der Einsetzbarkeit für unterschiedliche Anwendungen

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt ein Fingerexoskelett-Endglied vor, welches über zwei Komponenten verfügt, nämlich eine Stützstruktur und eine Taststruktur. Diese beiden Komponenten können separat gefertigt sein und unterschiedliche Materialen und mechanische Eigenschaften aufweisen und so spezifisch entsprechend den Anforderungen ausgebildet sein. Die beiden Komponenten können stoffschlüssig, beispielsweise mittels Verkleben oder Anspritzen miteinander verbunden sein. Vorzugsweise sind die beiden Komponenten aber separat voneinander ausgebildet und lösbar miteinander montiert.

In dem Fingerexoskelett-Endglied verfügt die Stützstruktur über zwei Abschnitte, nämlich einen Nagelbettabschnitt und einen Ringabschnitt. Möglich ist, dass ausschließlich diese beiden Abschnitte vorhanden sind oder weitere Abschnitte der Stützstruktur vorhanden sind.

In dem erfindungsgemäßen Fingerexoskelett-Endglied ist der Nagelbettabschnitt so ausgebildet, dass der Nagelbettabschnitt bei an dem Fingerendglied angelegtem Fingerexoskelett-Endglied oberhalb des Nagelbettes des Fingers (und damit im Normalfall oberhalb des Fingernagels) angeordnet ist, wobei sich der Nagelbettabschnitt beispielsweise ausschließlich hier erstrecken kann, ohne sich im Bereich der Fingerkuppe zu erstrecken. Möglich ist, dass die laterale Erstreckung des Nagelbettabschnittes (zumindest im vorderen Bereich) eine geringere laterale Erstreckung aufweist als das Nagelbett oder der Fingernagel.

Der Ringabschnitt ist so ausgebildet, dass der Ringabschnitt bei an dem Fingerendglied angelegtem Fingerexoskelett-Endglied das Fingerendglied umschließt. Hierbei kann der Ringabschnitt geschlossen sein oder auch geschlitzt ausgebildet sein. Für eine Ausführungsform, bei welcher die Stützstruktur auf ein Minimum reduziert ist, verfügt diese lediglich über den Nagelbettabschnitt und den Ringabschnitt, wobei der Ringabschnitt im Bereich seiner Oberseite in einem Endbereich des Nagelbettabschnitts in den Nagelbettabschnitt übergehen kann. Die Querschnitte des Nagelbettabschnitts und des Ringabschnitts folgen hierbei der Außenkontur des Fingerendglieds. Möglich ist, dass der Ringabschnitt einen unteren Ring-Teilabschnitt und einen oberen Ring-Teilabschnitt aufweist, In diesem Fall kann sich der untere Ring-Teilabschnitt in einer Vertikallängsebene erstrecken, während der obere Ring-Teilabschnitt gegenüber der Vertikallängsebene mit einem Neigungswinkel nach vorne geneigt sein kann. Möglich ist beispielsweise auch, dass an dem Ringabschnitt, insbesondere im Bereich des Übergangs zwischen den Ring-Teilabschnitten Lagerwangen für Schwenklagerelemente angebracht sind, mit denen ein Schwenklager mit einem benachbarten Fingerexoskelett-Glied ausgebildet ist.

Vorzugsweise ist die Stützstruktur aus einem Material hergestellt oder mit Materialstärken hergestellt oder als Verbundstruktur derart ausgebildet, dass die Federsteifigkeit, die mechanische Steifigkeit und/oder die Festigkeit größer ist als die der Taststruktur.

Erfindungsgemäß weist die Taststruktur für eine erste Variante einen Fingerspitzenabschnitt auf. Bei dem Fingerspitzenabschnitt handelt es sich vorzugsweise um den am weitesten distal angeordneten Endbereich der Taststruktur und/oder den Bereich der Taststruktur, der im Übergangsbereich von dem Fingernagel oder Nagelbett zu der Fingerkuppe des Fingerendgliedes angeordnet ist. Erfindungsgemäß ist der Fingerspitzenabschnitt der Taststruktur in Richtung der Längsachse nach hinten, also in proximaler Richtung, an einem vorderen Endbereich des Nagelbettabschnitts der Stützstruktur abgestützt.

Im Rahmen der Erfindung kann diese Abstützung durch eine Anlage von quer zu der Längsachse orientierten Kontaktflächen einerseits des Fingerspitzenabschnitts der Taststruktur und andererseits des vorderen Endbereichs des Nagelbettabschnitts der Stützstruktur gewährleistet werden. Alternativ oder kumulativ kann der Fingerspitzenabschnitt der Taststruktur einen Kopplungsabschnitt aufweisen, der mit einem Kopplungsabschnitt der Stützstruktur (vorzugsweise lösbar) gekoppelt ist. Hierbei kann der Kopplungsabschnitt der Stützstruktur von dem vorderen Endbereich des Nagelbettabschnitts ausgebildet sein. Die Kopplungsabschnitte gewährleistet eine gute mechanische Kopplung zwischen der Taststruktur und der Stützstruktur, wobei die Kopplung beispielsweise einen Montage- und Demontagefreiheitsgrad gewährleistet kann, während eine gute Übertragung von Kopplungskräften und unter Umständen auch von Kopplungsmomenten für andere Richtungen als den Kopplungsfreiheitsgrad gewährleistet ist.

Für die Ausgestaltung des Kopplungsabschnitt des Fingerspitzenabschnitts der Taststruktur gibt es beliebige Möglichkeiten, wobei ein Formschluss, ein Reibschluss, eine Rastverbindung, eine Verriegelungsverbindung oder sogar eine Verbindung mittels eines zusätzlichen Kopplungselements Einsatz finden kann. Für einen besonderen Vorschlag der Erfindung weist der Kopplungsabschnitt einen Doppel-T-Kopf auf, der in einem Querschnitt einen Vertikalschenkel sowie zwei parallel zueinander angeordnete, beanstandete Horizontalschenkel aufweist.

Möglich ist, dass die lateralen Endbereiche der Horizontalschenkel frei sind. Vorzugsweise sind die Enden der Horizontalschenkel des Doppel-T-Kopfes über Seitenwände miteinander verbunden, womit der Verbund und auch die Steifigkeit des Doppel-T-Kopfes erhöht werden kann.

Möglich ist, dass im Bereich des Doppel-T-Kopfs auf beiden Seiten des Vertikalschenkels des Doppel-T Kopplungsräume gebildet sind, die in dem Querschnitt begrenzt sind durch eine zugeordnete Seitenwand, den Vertikalschenkel und jeweils eine Hälfte der beiden Horizontalschenkel.

Auch der Kopplungsabschnitt des Nagelbettabschnitts der Stützstruktur kann im Rahmen der Erfindung beliebig ausgebildet sein. Für einen Vorschlag der Erfindung weist dieser Kopplungsabschnitt eine nach vorne, also in distale Richtung offene Aufnahmenut auf. Diese Ausgestaltung ermöglicht, dass der Kopplungsabschnitt der Taststruktur von vorne in proximale Richtung in die offene Aufnahmenut eingeschoben werden kann zur Herbeiführung der Kopplung. Ist der Kopplungsabschnitt der Taststruktur als Doppel-T-Kopf ausgebildet, kann der Vertikalschenkel des Doppel-T in die nach vorne offene Aufnahmenut in proximale Richtung eingeschoben werden.

Für einen Vorschlag der Erfindung ist (für den in proximaler Richtung in die Aufnahmenut der Stützstruktur eingeschobenen Doppel-T-Kopf der Taststruktur) der Nagelbettabschnitt der Stützstruktur im Umgebungsbereich der Aufnahmenut zwischen den beiden Horizontalschenkeln des Doppel-T-Kopfes der Taststruktur in eine Richtung vertikal zur Erstreckungsebene des vorderen Endbereichs des Nagelbettabschnitts gefangen.

Möglich ist, dass der Nagelbettabschnitt der Stützstruktur beidseitig der Aufnahmenut Zungen aufweist, die beispielsweise eine in Richtung des vorderen Endbereichs abnehmende laterale Erstreckung aufweisen können. Die Zungen können dann jeweils in den zuvor erläuterten Kopplungsräumen der Taststruktur aufgenommen werden.

Möglich ist, dass eine alleinige Kopplung der Taststruktur mit der Stützstruktur über die Kopplungsabschnitte derselben erfolgt oder zusätzliche Kopplungen vorgesehen sind. Für einen besonderen Vorschlag der Erfindung weist die Taststruktur einen Vorsprung auf. Dieser Vorsprung hintergreift eine in proximale Richtung weisende Stirnfläche des Nagelbettabschnittes der Stützstruktur, wobei diese Stirnfläche vorzugsweise im Übergangsbereich zwischen dem Nagelbettabschnitt und dem Ringabschnitt angeordnet ist. Infolge dieses Hintergreifens ist der Nagelbettabschnitt in Richtung der Längsachse zwischen dem Kopplungsabschnitt der Taststruktur und dem Vorsprung der Taststruktur gefangen. Ein Hintergreifen der in proximale Richtung weisenden Stirnfläche des Nagelbettabschnitts durch den Vorsprung der Taststruktur kann dabei während der Montage unter elastischer Verformung der Vorsprungs oder des benachbarten Abschnitts der Taststruktur erfolgen, wobei dann durch eine elastische Rückstellkraft der Vorsprung hinter die in proximale Richtung weisende Stirnfläche des Nagelbettabschnitts der Stützstruktur gelangen kann. Möglich ist auch, dass der Vorsprung durch das in das Finger-Exoskelett-Endglied eingeschobene Fingerendglied nach außen gedrückt wird oder in der hintergreifenden Stellung auf der Innenseite an dem Fingerendglied anliegt und auf diese Weise gesichert ist.

Möglich ist durchaus, dass der Nagelbettabschnitt der Stützstruktur eine so große laterale Erstreckung aufweist, dass der Nagelbettabschnitt über die Seitenfläche der Fingerkuppe in einer Draufsicht übersteht, um diese Seitenflächen der Fingerkuppe und auch Teilabschnitte der Taststruktur in diesem Bereich zu schützen. Für einen besonderen Vorschlag der Erfindung steht in der Draufsicht die Taststruktur zumindest in eine laterale Richtung gegenüber der Stützstruktur über, womit gewährleistet ist, dass die Stützstruktur nicht einen Kontakt der Taststruktur und damit der Fingerkuppe im Seitenbereich blockiert, sondern auch der Seitenbereich der Taststruktur und der Fingerkuppe für eine haptische oder taktile Wahrnehmung genutzt werden kann.

Für eine alternative oder kumulative zweite Variante der Erfindung weist die Taststruktur einen Doppel-T-Kopf. Der Doppel-T-Kopf ist (bspw. von vorne, von hinten oder von der Seite) in eine Aufnahmenut der Stützstruktur einschiebbar. Für diese Variante der Erfindung kann grundsätzlich das zuvor zu dem Doppel-T-Kopf und der Aufnahmenut Gesagte entsprechend gelten. Allerdings muss für diese Variante der Doppel-T-Kopf nicht im Bereich des Fingerspitzenabschnitts der Taststruktur angeordnet sein. Vielmehr kann der Doppel-T-Kopf an beliebiger Stelle entlang des Fingers und an der Taststruktur vorgesehen sein und die Verbindung zwischen dem Doppel-T-Kopf und der Aufnahmenut kann an beliebiger Stelle der Stützstruktur angeordnet sein. So kann beispielsweise auch die Aufnahmenut an dem Nagelbettabschnitt, dem Ringabschnitt, einem Ring-Teilabschnitt oder einem beliebigen weiteren Abschnitt der Stützstruktur vorgesehen sein.

Eine weitere Lösung der der Erfindung zugrunde liegenden Aufgabe stellt ein Fingerexoskelett dar, welches über ein Fingerexoskelett-Endglied verfügt, wie dieses zuvor beschrieben worden ist. In diesem Fall ist das Fingerexoskelett-Endglied über ein Schwenklager mit einem weiteren Fingerexoskelett-Glied verbunden. Das Fingerexoskelett kann dann lediglich über das Fingerexoskelett-Endglied und das weitere Fingerexoskelett-Glied verfügen, womit das Fingerexoskelett beispielsweise für einen Daumen bestimmt sein kann. Möglich ist aber auch, dass das weitere Fingerexoskelett-Glied mit einem zusätzlichen Fingerexoskelett-Glied verbunden ist, womit dann das Fingerexoskelett auch für einen Daumen (s. auch das hier beschriebene und dargestellte Ausführungsbeispiel) oder für einen Zeigefinger, Mittelfinger, Ringfinger oder kleinen Finger bestimmt sein kann. Möglich ist auch, dass mehrere zusätzliche Fingerexoskelett-Glieder an das Fingerexoskelett-Glied und das weitere Fingerexoskelett-Glied anschließen, so dass zwei, drei, vier, ... Fingerexoskelett-Glied hintereinander angeordnet sind und miteinander zu einer Art offener Kette gelenkig miteinander verbunden sind. Ein in proximaler Richtung viertes Fingerexoskelett-Glied kann bspw. ein flexibles Element sein, welches mit einer Halterung am Handgelenk oder einem Handgelenkband verbunden sein kann. Möglich ist schließlich auch, dass einzelne Fingerglieder überbrückt sind, so dass die Zahl der Fingerexoskelett-Glieder kleiner sein kann als die Zahl der darin angeordneten Fingerglieder.

Eine weitere Lösung der der Erfindung zugrunde liegenden Aufgabe stellt ein Set dar, welches einerseits über ein Fingerexoskelett-Endglied verfügt, wie dieses zuvor beschrieben ist. Des Weiteren verfügt das Set über (mindestens) eine weitere Taststruktur. Die Taststruktur des Fingerexoskelett-Endglieds und die weitere Taststruktur verfügen dann über gleiche Kopplungsabschnitte, sodass die Taststruktur und die weitere Taststruktur wahlweise mit der Stützstruktur des Fingerexoskelett-Endglieds gekoppelt werden können. Die Taststruktur und die weitere Taststruktur können dann aber unterschiedliche Steifigkeiten und/oder unterschiedliche Formen und/oder unterschiedliche Größen aufweisen. Je nach gewünschter Anwendung kann dann spezifisch die Taststruktur oder die weitere Taststruktur ausgewählt werden mit der dann für diese Anwendung vorteilhaften Steifigkeit und/oder Form und/oder Größe. Sofern sich die Taststruktur und die weitere Taststruktur hinsichtlich der Formen unterscheiden, kann es sich um mikroskopische oder makroskopische Formunterschiede, die Ausstattung der Taststruktur mit unterschiedlichen Ausnehmungen, Ausnehmungen unterschiedlicher Größen oder Orten, unterschiedlichen Oberflächen und Oberflächenrauigkeiten, unterschiedlichen Fortsätze, Rippen oder Nuten in den Oberflächen, unterschiedliche Vorsprünge u. ä. handeln. Verfügen die Taststruktur und die weitere Taststruktur über unterschiedliche Größen, können diese für Benutzer verwendet werden, deren Finger (u. U. bei gleicher Länge der Fingerglieder) unterschiedlich große Querschnitte aufweisen. Unterschiedliche Formen der Taststruktur und der weiteren Taststruktur können bspw. unterschiedlichen Montageaufgaben oder unterschiedlichen medizinischen Zwecken dienen.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Ansicht ein Fingerexoskelett mit einem Fingerexoskelett-Endglied.
- **Fig. 2**: zeigt in einer räumlichen Darstellung schräg von rechts vorne und oben das Fingerexoskelett-Endglied aus Fig. 1, wobei eine Tragstruktur und eine Stützstruktur voneinander demontiert sind.
- **Fig. 3**: zeigt in einer räumlichen Darstellung schräg von oben und links hinten das Fingerexoskelett-Endglied gemäß Fig. 2.
- **Fig. 4**: zeigt in einer Draufsicht das Fingerexoskelett-Endglied gemäß Fig. 2 und 3.
- **Fig. 5**: zeigt in einer räumlichen Darstellung schräg von rechts vorne und oben das Fingerexoskelett-Endglied gemäß Fig. 2 bis 4.
- **Fig. 6**: zeigt in einer Seitenansicht das Fingerexoskelett-Endglied gemäß Fig. 2 bis 5.
- **Fig. 7**: zeigt in einer Draufsicht das Fingerexoskelett-Endglied gemäß Fig. 2 bis 6, wobei die Tragstruktur und die Stützstruktur miteinander montiert sind.
- **Fig. 8**: zeigt in einer räumlichen Darstellung schräg von rechts vorne und oben das Fingerexoskelett-Endglied gemäß Fig. 2 bis 7 in der montierten Betriebsstellung.
- **Fig. 9**: zeigt in einer räumlichen Darstellung schräg von rechts vorne und unten das Fingerexoskelett-Endglied gemäß Fig. 2 bis 8 in der montierten Betriebsstellung.
- **Fig. 10**: zeigt in einer Seitenansicht das Fingerexoskelett-Endglied gemäß Fig. 2 bis 9 in der montierten Betriebsstellung.
- **Fig. 11**: zeigt bei Schnittführung gemäß Fig. 10 einen Schnitt XI-XI des Fingerexoskelett-Endglieds gemäß Fig. 2 bis 10 in der montierten Betriebsstellung.
- **Fig. 12**: zeigt bei Schnittführung gemäß Fig. 10 einen Teilschnitt XII-XII des Fingerexoskelett-Endglieds gemäß Fig. 2 bis 11 in der montierten Betriebsstellung.
- **Fig. 13**: zeigt einen vertikalen mittigen Längsschnitt des Fingerexoskelett-Endglieds gemäß Fig. 2 bis 12 in der montierten Betriebsstellung.
- **Fig. 14**: zeigt in einer Draufsicht eine weitere Ausführungsform eines Fingerexoskelett-Endglieds mit einer Stützstruktur des Fingerexoskelett-Endglieds entsprechend Fig. 2 bis 13 und einer anderen Taststruktur in der montierten Betriebsstellung.
- **Fig. 15**: zeigt in einer räumlichen Darstellung schräg von rechts vorne und oben das Fingerexoskelett-Endglied gemäß Fig. 14.
- **Fig. 16**: zeigt in einer räumlichen Darstellung schräg von rechts vorne und unten das Fingerexoskelett-Endglied gemäß Fig. 14 und 15.
- **Fig. 17**: zeigt in einer Seitenansicht das Fingerexoskelett-Endglied gemäß Fig. 14 bis 16.
- **Fig. 18**: zeigt einen vertikalen mittigen Längsschnitt des Fingerexoskelett-Endglieds gemäß Fig. 14 bis 17.

### FIGURENBESCHREIBUNG

In der vorliegenden Anmeldung sind teilweise Komponenten oder Merkmale, die sich hinsichtlich der Gestaltung oder Funktion entsprechen oder ähneln, mit denselben Bezugsziffern gekennzeichnet, wobei diese dann durch einen zusätzliche Buchstaben a, b, ... voneinander unterschieden sein können. Auf diese Komponenten oder Merkmale kann dann auch ohne den ergänzenden Buchstaben a, b, ... Bezug genommen sein, womit dann eine Komponente oder ein Merkmal, mehrere Komponenten oder Merkmale und sämtliche Komponenten oder Merkmale gemeint sein kann/können.

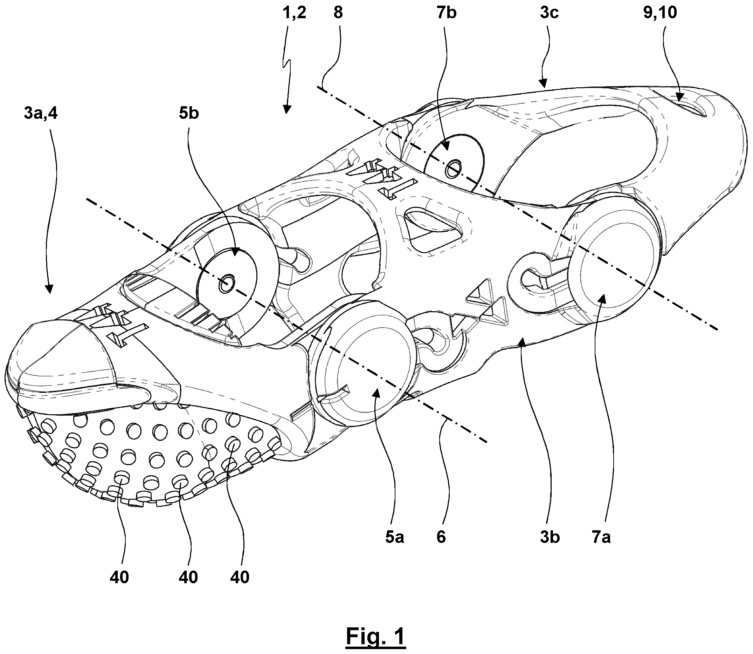

**Fig. 1** zeigt ein Fingerexoskelett 1, bei welchem es sich um ein Daumenexoskelett 2 handelt. Das Fingerexoskelett 1 verfügt über Fingerexoskelettglieder 3a, 3b, 3c. Das vorderste, dass heißt distal, angeordnet Fingerexoskelett-Glied 3a bildet dabei ein Fingerexoskelett-Endglied 4. Das Fingerexoskelett-Endglied 4 ist über Schwenklager 5a, 5b mit dem benachbarten Fingerexoskelett-Glied 3b verschwenkbar um eine Schwenkachse 6 verbunden. Entsprechend ist das Fingerexoskelett-Glied 3b über Schwenklager 7a, 7b verschwenkbar um eine Schwenkachse 8 mit dem Fingerexoskelett-Glied 3c verbunden. Das Fingerexoskelett-Endglied 4 ist für die Aufnahme des Fingerendglieds bestimmt, während die proximal hiervon angeordneten Fingerexoskelett-Glieder 3b, 3c für die Aufnahme oder Abstützung der weiteren Fingerglieder bestimmt sind. Das Fingerexoskelett-Glied 3c kann eine Aufnahme 9, insbesondere eine Ausnehmung 10, aufweisen, an welcher ein hier nicht dargestelltes Halte- oder Zugelement befestigt werden kann, mit welchem das Fingerexoskelett 1 beispielsweise an einem Handgelenk gesichert werden kann. Hinsichtlich der weiteren Möglichkeiten für die Ausgestaltung des Fingerexoskelett 1 und die Gestaltung der Schwenklager 5, 7 wird auf die nicht vorveröffentlichte Patentanmeldung DE 10 2023 124 508.2 verwiesen.

Das Fingerexoskelett-Endglied 4 verfügt über oder besteht aus eine(r) Stützstruktur 11 und eine(r) Taststruktur 12.

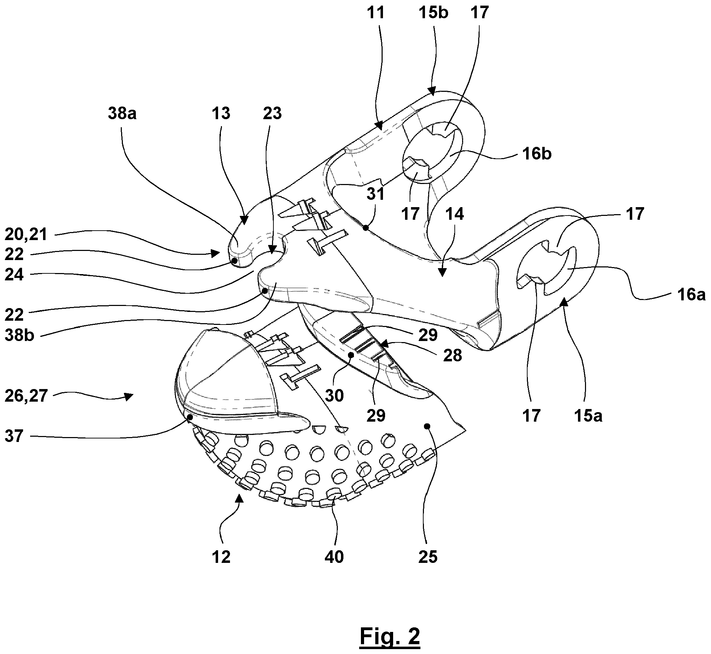

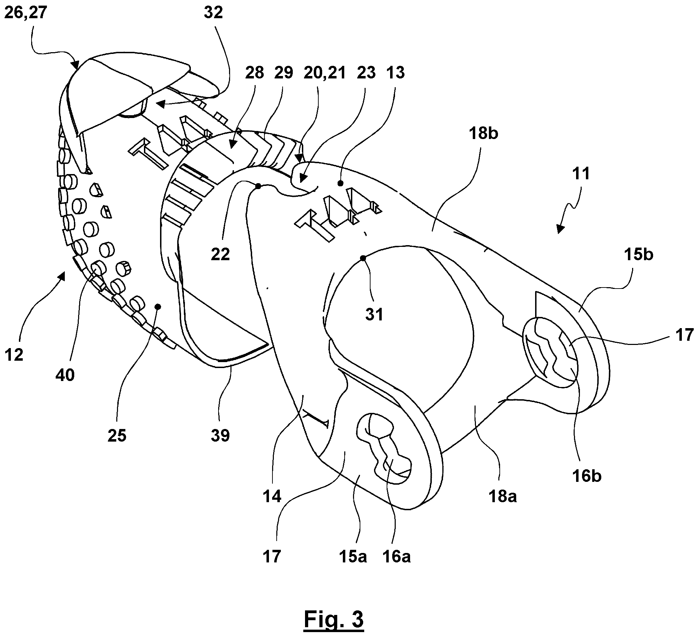

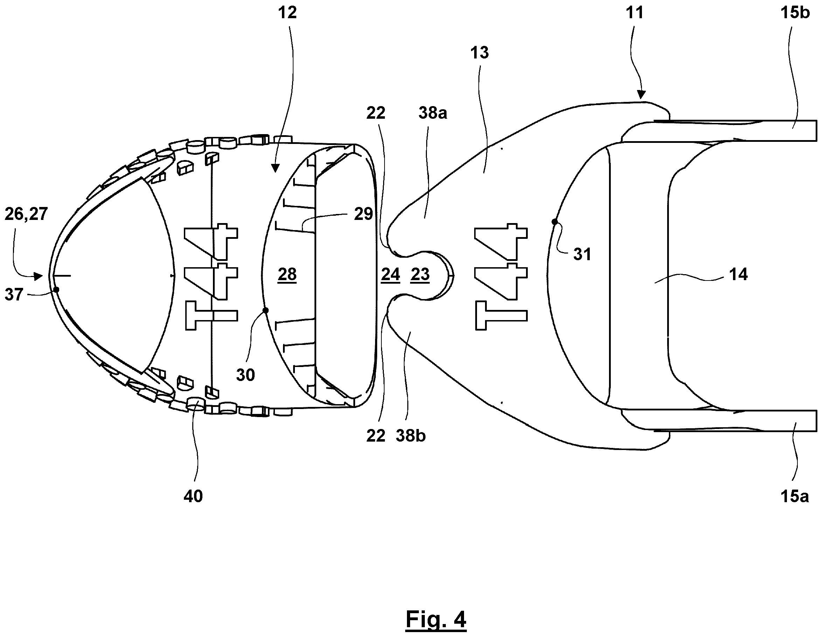

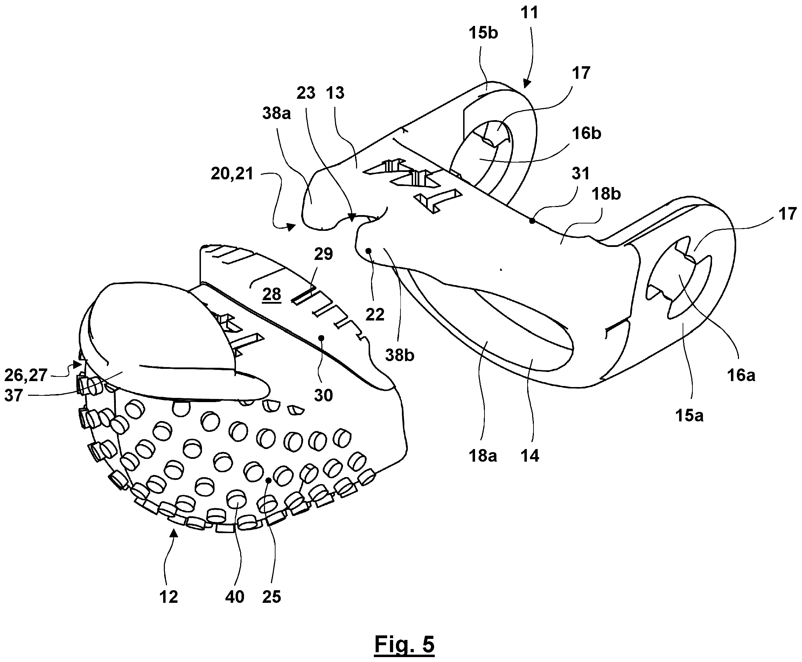

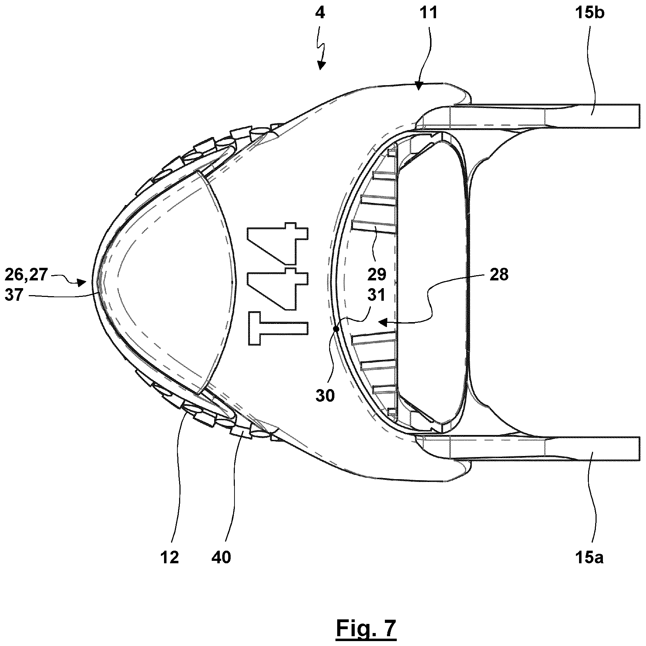

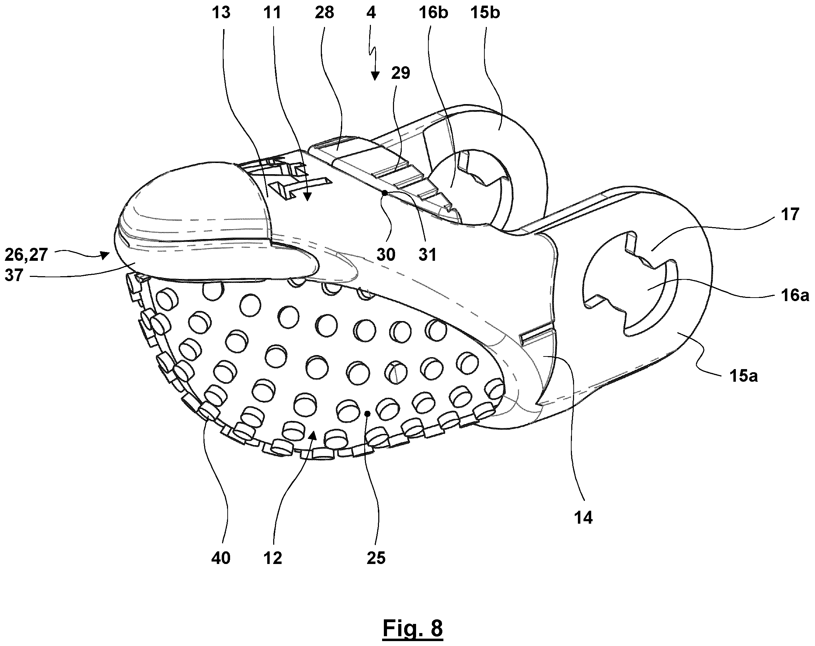

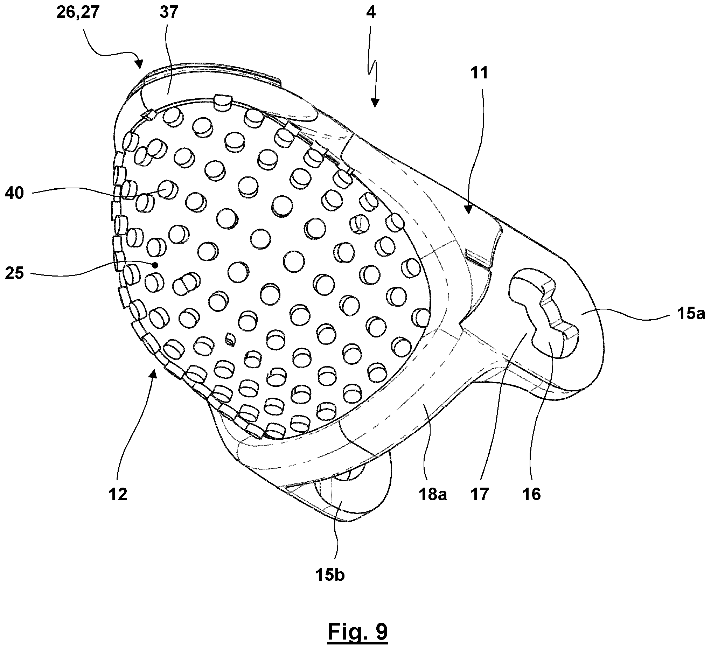

**Fig. 2** bis **6** zeigen das Fingerexoskelett-Endglied 4 für voneinander demontierte Stützstruktur 11 und Taststruktur 12, während **Fig. 7** bis **13** eine montierte Betriebsstellung der Stützstruktur 11 und der Taststruktur 12 zeigen.

Die Stützstruktur 11 verfügt vier Abschnitte, nämlich einen Nagelbettabschnitt 13, einen Ringabschnitt 14 und Lagerwangenabschnitte 15a, 15b.

Die Lagerwangenabschnitte 15 sind platten- oder stabförmig ausgebildet und erstrecken sich in proximaler Richtung auf beiden Seiten des Fingerendgliedes, welches in dem Fingerexoskelett-Endglied 4 angeordnet ist. Die Lagerwangenabschnitte 15a, 15b verfügen jeweils über ein Lagerauge 16a, 16b, welches Bestandteil der Schwenklager 5a, 5b ist. Für das dargestellte Ausführungsbeispiel verfügen die Lageraugen 16 jeweils über teilzylindrische Abschnitte, die für die Führung der Drehbewegung der Schwenklager 5 bestimmt sind, und über Anschläge 17, über welche eine Begrenzung der Schwenkwinkel der Schwenklager 5 erfolgt.

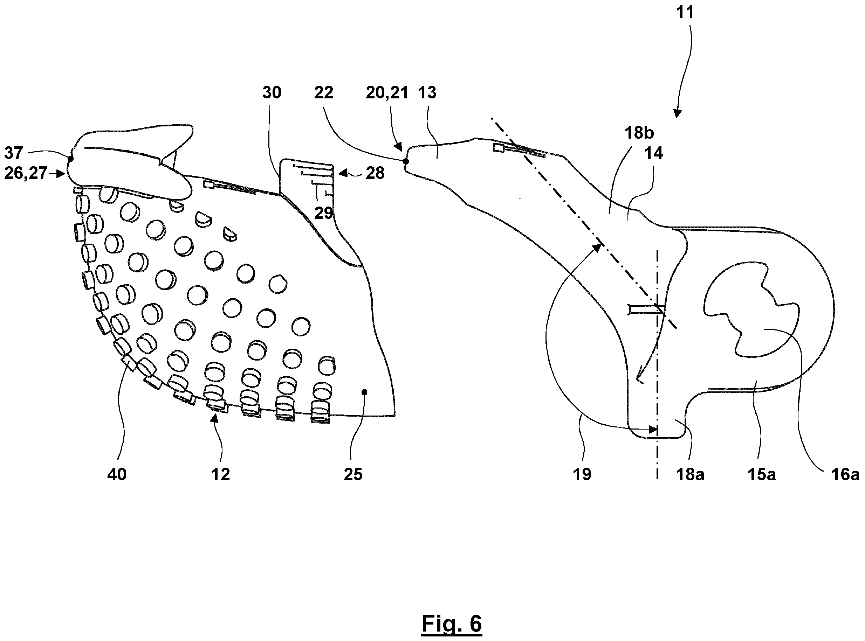

Der Ringabschnitt 14 verfügt über eine Innenfläche, die geeignet für die passgenaue und spielfreie Aufnahme des Fingerendglieds bestimmte Innenkontur aufweist, wobei auch ein den Tragekomfort erhöhender Spalt oder Zwischenraum zwischen dem Fingerendglied und dem Ringabschnitt 14 ausgebildet sein kann. Der Ringabschnitt 14 verfügt über einen unteren, ungefähr halbringförmigen Ring-Teilabschnitt 18a, der sich auf der Unterseite des Fingerendgliedes in der Querebene erstreckt und im Bereich der Lagerwangenabschnitte 15a, 15b endet. Oberhalb der Lagerwangenabschnitte 15a, 15b verfügt der Ringabschnitt 14 über einen Ring-Teilabschnitt 18b, der ebenfalls halbringförmig ausgebildet ist, aber gegenüber der Querebene nach vorne geneigt ist. Hierbei kann der Neigungswinkel 19 der Ring-Teilabschnitte 18a, 18b zueinander bei Projektion in eine vertikale Längsebene im Bereich von 90° bis 170°, vorzugsweise im Bereich von 110° bis 160°, im Bereich von 120° bis 150° oder im Bereich von 130° bis 140°, liegen (vgl. Fig. 6).

Um lediglich ein die Erfindung nicht beschränkendes Beispiel zu nennen, führt ein Neigungswinkel 19 von 90° dazu, dass sich der Ringabschnitt 14 parallel zur Längsachse erstreckt. In diesem Fall kann sich beispielsweise der Ringabschnitt 14 bis zu dem vorderen Endbereich 20 und auf der Oberseite um diesen herum erstrecken. Der Ringabschnitt 14 kann dann die dorsale Seite des distalen Abschnittes des Fingers (den Fingernagelbereich) und die Fingerspitze abdecken.

Wenn andererseits der Neigungswinkel 19 170° beträgt, kann sich ein weiterer Abschnitt, der von dem Ringabschnitt 14 ausgeht, auf der dorsalen Seite in distaler Richtung erstrecken, womit dann die Abstützung an diesem weiteren Abschnitt erfolgen kann, oder der Ort der Abstützung der Taststruktur 12 an der Stützstruktur 11 kann bei einem derartigen Neigungswinkel 19 ohne einen derartigen weiteren Abschnitt von der Fingerspitze weg nach hinten verlagert sein, womit ermöglicht ist, dass die Fingerspitze und der hieran anschließende distale Endbereich des Fingers nicht von der Stützstruktur 11 abgedeckt ist, sodass die Taststruktur 12 eine taktile Rückmeldung sowohl auf der palmaren Seite als auch auf der dorsalen Seite als auch auf den lateralen Seiten des distalen Endbereichs des Fingers gewährleisten kann.

Der Nagelbettabschnitt 13 ist grundsätzlich plattenförmig ausgebildet und erstreckt sich oberhalb des Nagelbetts oder des Fingernagels des Fingerendgliedes, wobei der Nagelbettabschnitt 13 der Krümmung des Fingernagels oder Fingernagelbettes folgen kann. Die laterale Erstreckung des Nagelbettabschnitts 13 nimmt in distale Richtung ab, sodass der Nagelbettabschnitt 13 in erster Näherung in einer Draufsicht trapezförmig oder dreieckig sein kann.

Der Nagelbettabschnitt 13 und der Ringabschnitt 14 verfügen über einen gemeinsamen Übergangsbereich, der im proximalen Endbereich des Nagelbettabschnitts 13 und im oberen Endbereich des Ringabschnitts 14 gebildet ist.

In einem vorderen Endbereich 20 verfügt der Nagelbettabschnitt 13 über einen Kopplungsabschnitt 21, der mit einer Stirnseite 22 und einer nach vorne offenen Aufnahmenut 23 gebildet ist. Für das dargestellt Ausführungsbeispiel weist die Aufnahmenut 23 eine eingangsseitige Verengung 24 auf. Die Stützstruktur 11 bildet beidseitig der Aufnahmenut 23 Zungen 38a, 38b aus.

Die Taststruktur 12 ist in grober Näherung fingerhutartig oder sockenartig ausgebildet und für die Aufnahme des Fingerendglieds in dem Inneren bestimmt, wobei die Taststruktur 12 sowohl die Fingerkuppe als auch das Nagelbett und den Fingernagel aufnimmt und die Mantelfläche und die Stirnseite des Fingerendgliedes geschlossen umgibt und abdeckt. Abweichend zu den dargestellten Ausführungsformen kann die Taststruktur 12 aber auch beliebig geformte Öffnungen aufweisen

Die Taststruktur 12 weist einen Grundkörper 25 auf, dessen Elastizität geeignet für eine haptische oder taktile Wahrnehmung ausgebildet ist und der insbesondere biegeweich und elastisch ausgebildet ist und der die Fingerkuppe abdeckt. In einem Fingerspitzenabschnitt 26 ist an dem Grundkörper 25 ein Kopplungsabschnitt 27 angeformt. Des Weiteren ist an den Grundkörper 25 auf der Oberseite im proximalen Endbereich ein Vorsprung 28 angeformt. Der Vorsprung 28 kann sich hierbei auf der Oberseite über die gesamte Breite erstrecken und/oder zur Vereinfachung der Montage in Längsrichtung orientierte, von dem proximalen Endbereich ausgehende Nuten oder Durchgangsschlitze 29 aufweisen. Eine in distale Richtung weisende Stirnfläche 30 des Vorsprungs 28 ist entsprechend der in proximale Richtung weisenden Stirnfläche 31 des Ringabschnitts 14/Nagelbettabschnitts 13 geformt.

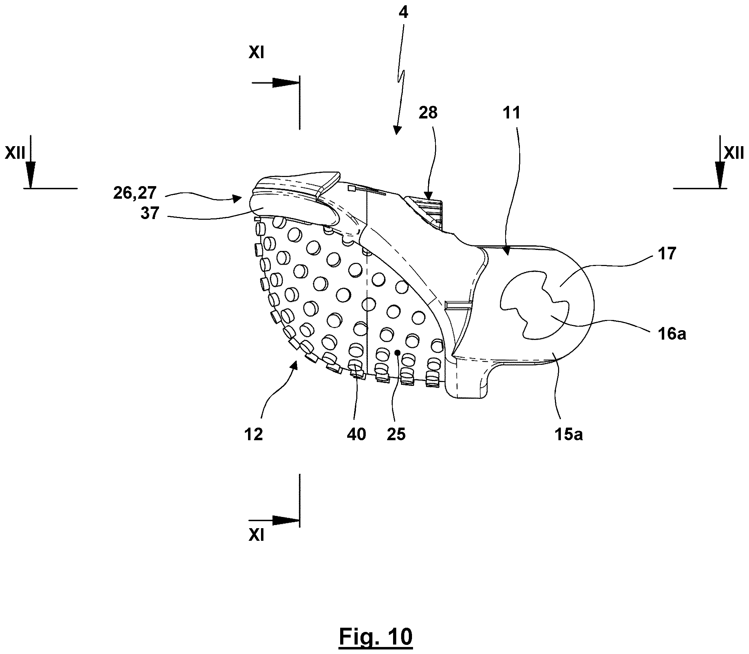

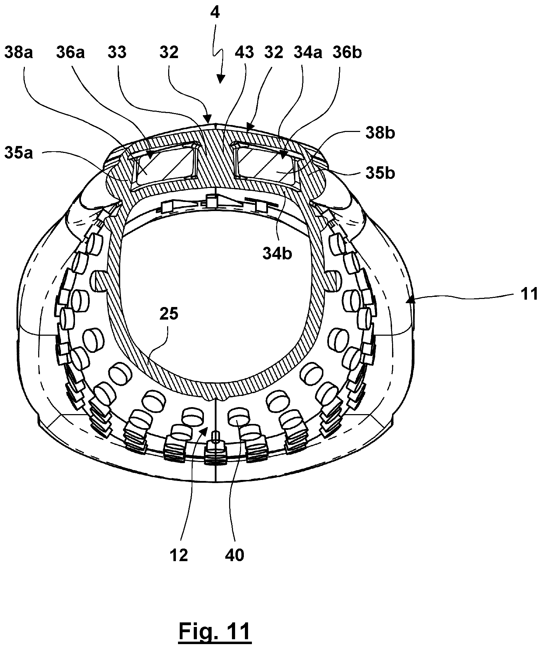

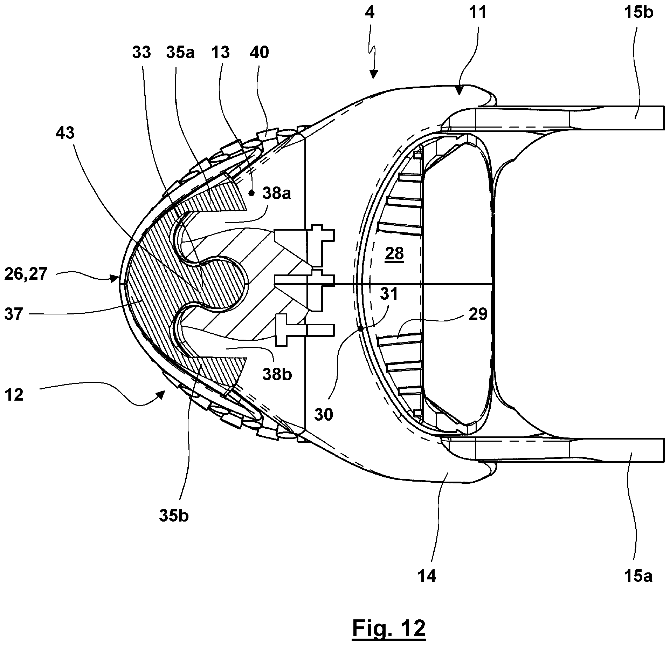

Die Gestaltung des Kopplungsabschnitts 27 ist insbesondere in den in Fig. 10 gekennzeichneten Schnitten XI-XI und XII-XII (vgl. **Fig 11** und 12) zu erkennen:
Der Kopplungsabschnitt 27 verfügt über einen Doppel-T-Kopf 32, der einen Vertikalschenkel 33 und zwei parallele und voneinander beabstandete Horizontalschenkel 34a, 34b aufweist. Hierbei ist der untere Horizontalschenkel 34b von dem Grundkörper 25 der Taststruktur 12 ausgebildet. Für das dargestellte Ausführungsbeispiel sind die freien Endbereiche der Horizontalschenkel 34a, 34b über Seitenwände 35a, 35b mit dem Grundkörper 25 verbunden. Auf diese Weise sind auf beiden Seiten des Vertikalschenkels 33 Kopplungsräume 36a, 36b gebildet, die nach oben durch einen Halbschenkel des Horizontalschenkels 34a, nach unten durch den von dem Grundkörper 25 gebildeten Halbschenkel des Horizontalschenkels 34b, in eine laterale Richtung durch den Vertikalschenkel 33 und in die andere laterale Richtung durch die Seitenwand 35a, 35b geschlossen sind. Auf der Stirnseite sind die Kopplungsräume 36 durch eine Stirnwand 37 geschlossen, womit die Kopplungsräume 36 ausschließlich in proximaler Richtung offen sind. Vorzugsweise sind die Kopplungsräume 36 in distale Richtung verjüngt und spitz zulaufend ausgebildet.

Die Montage der Taststruktur 12 an der Stützstruktur 11 erfolgt wie folgt:
Mit dem Annähern der Taststruktur 12 in proximaler Richtung an die Stützstruktur 11 werden die Zungen 38 in die Kopplungsräume 36 eingeführt. Mit diesem Einführen gelangt der Vertikalschenkel 33 des Kopplungsabschnitts 27 in die Aufnahmenut 23. Unter elastischer Komprimierung des Vertikalschenkels 33 passiert der Vertikalschenkel 33 die Verengung 24, sodass der Kopplungsabschnitt 27 nur wieder aus der Aufnahmenut 23 austreten kann unter erneuter Komprimierung des Vertikalschenkels 33, womit eine erste Sicherungskraft gegenüber einer Demontage in distaler Richtung bereitgestellt ist. In dem montierten Zustand liegen einerseits die Innenflächen der Stirnwand 37 an den Stirnseiten 22 der Zungen 38 an. Alternativ oder kumulativ kann der Vertikalschenkel 33 an der endseitigen Begrenzung der Aufnahmenut 23 anliegen. In lateraler Richtung ist der Vertikalschenkel 33 zwischen den Zungen 38 gefangen. Wie insbesondere in Fig. 11 zu erkennen ist, sind die Zungen 38 zwischen den beiden Horizontalschenkeln 34a, 34b in eine vertikale Richtung gefangen.

Für das dargestellte Ausführungsbeispiel erfolgt eine zusätzliche Sicherung der Taststruktur 12 an der Tragstruktur 11 dadurch, dass der Vorsprung 28 die Stützstruktur 11 auf der proximalen Seite hintergreift, womit in Richtung der Längsachse die Stirnfläche 30 des Vorsprungs 28 (mit oder ohne Spiel) zur Anlage kommt an die Stirnfläche 31 des Ringabschnittes 14 der Stützstruktur 11. Der proximale Endbereich der Taststruktur 12 kann mit einem Ringsegmentabschnitt 39, der in Umfangsrichtung an den Vorsprung 28 anschließt, an der Innenseite des Ringabschnitts 14 der Stützstruktur 11 anliegen und abgestützt sein.

Für das in den Fig. 1 bis 13 dargestellte Ausführungsbeispiel verfügt der Grundkörper 25 der Taststruktur 12 in dem nicht durch die Stützstruktur 11 abgedeckten Teilbereich über noppenartige, gleichmäßig oder ungleichmäßig verteilte Vorsprünge 40, die beispielsweise zylindrisch mit ebener Stirnfläche ausgebildet sein können.

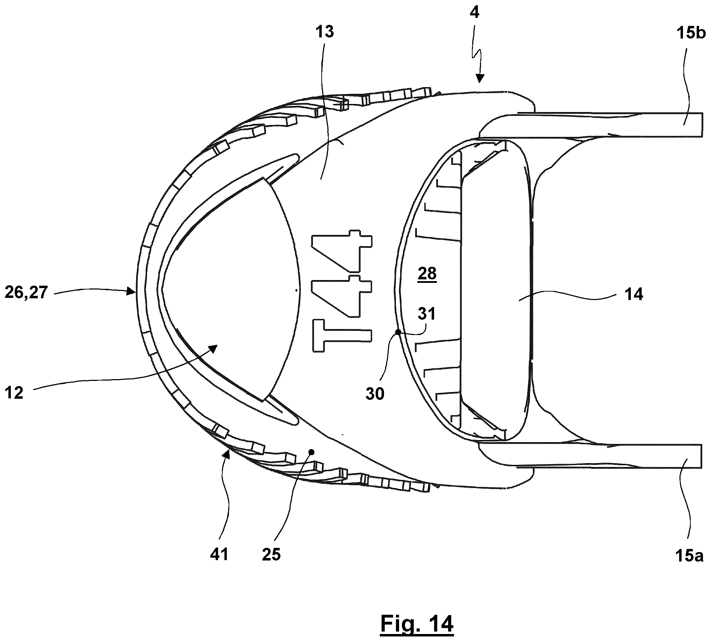

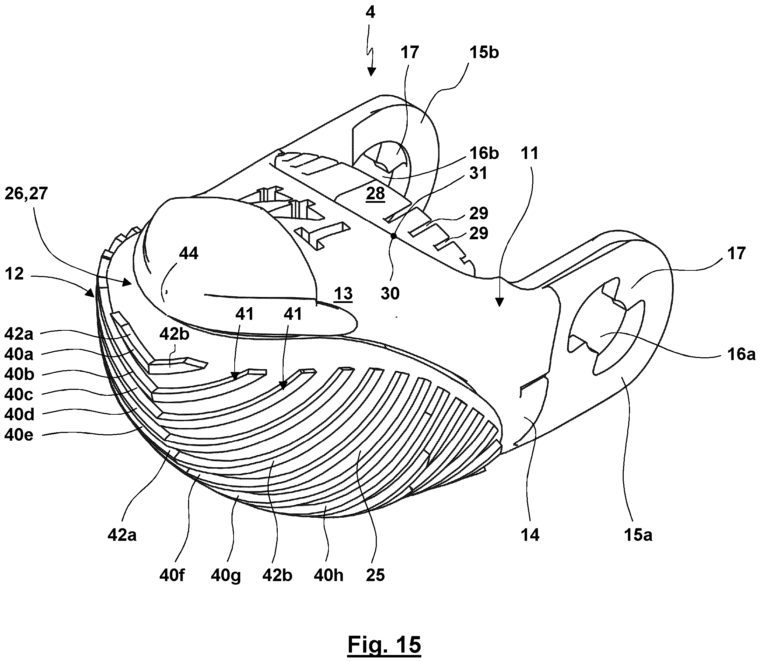

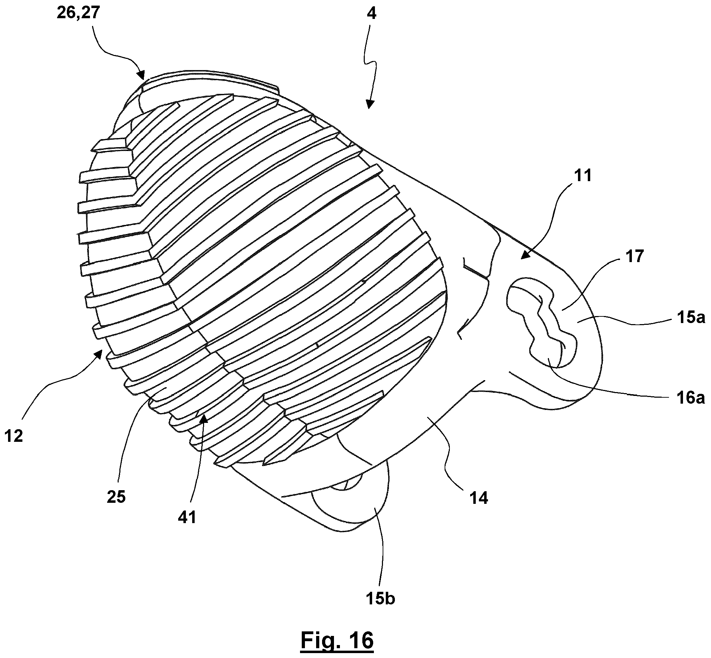

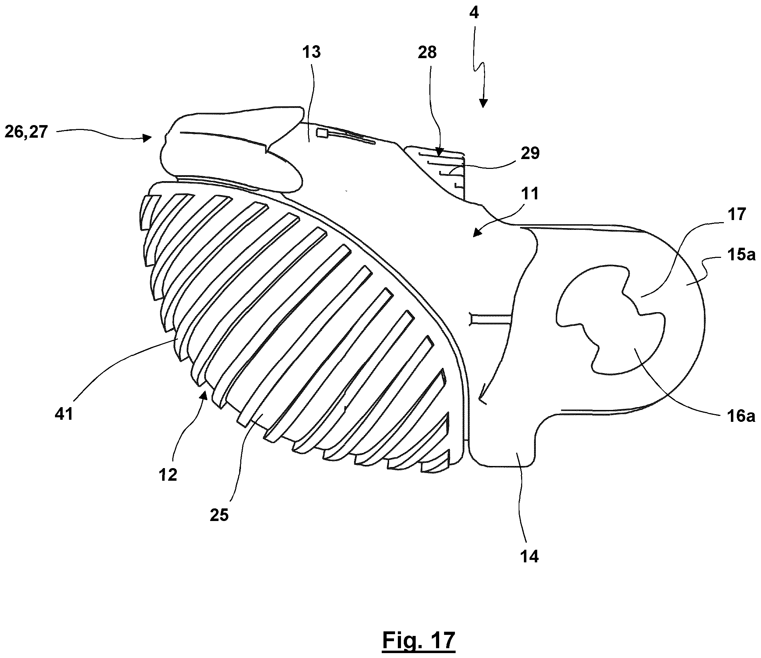

Die **Fig. 14** bis **18** zeigen eine andere Ausführungsform eines Fingerexoskelett-Endglieds 4, bei welcher dieselbe Stützstruktur 11 eingesetzt ist wie in den Fig. 1 bis 13. Allerdings ist hier eine andere Taststruktur 12 eingesetzt: Hier verfügt der Grundkörper 25 nicht über noppenförmige Vorsprünge 40, sondern sich entlang dem Grundkörper 25 erstreckende Rippen 41 mit dazwischen ausgebildeten Nuten. Die Rippen 41 können, wie in den Figuren ersichtlich ist, zumindest eine Komponente in Querrichtung aufweisen und sich auf der Unterseite nahezu vollständig entlang des Grundkörpers zwischen der Stützstruktur 11 erstrecken. Wie dargestellt können die Rippen 41 auch Rippenabschnitte 42a, 42b aufweisen, die V-förmig angeordnet sind, wobei vorzugsweise die Spitze des V von dem Fingerspitzenabschnitt 26 weg orientiert sind. Die Rippen 41 oder Rippenabschnitte 42 sind jeweils parallel zueinander angeordnet.

Die Taststruktur 12 ist aus einem Material hergestellt, welches eine größere Elastizität aufweist als das Material, aus dem die Stützstruktur 11 hergestellt ist. Möglich ist, dass die Stützstruktur 11 mit Verstärkungen oder einem Verbundmaterial gebildet ist, um eine vergrößerte Steifigkeit bereitzustellen, während die Taststruktur 12 keinerlei derartige Verstärkungen oder ein Verbundmaterial aufweisen kann. Alternativ oder kumulativ kann eine größere Nachgiebigkeit der Taststruktur 12 herbeigeführt werden dadurch, dass die Taststruktur 12 eine kleinere Wandstärke aufweist als die Stützstruktur 11 und/oder die Taststruktur 12 in geringerem Ausmaß mit versteifenden Rippen u. ä. ausgestattet ist als die Stützstruktur 11.

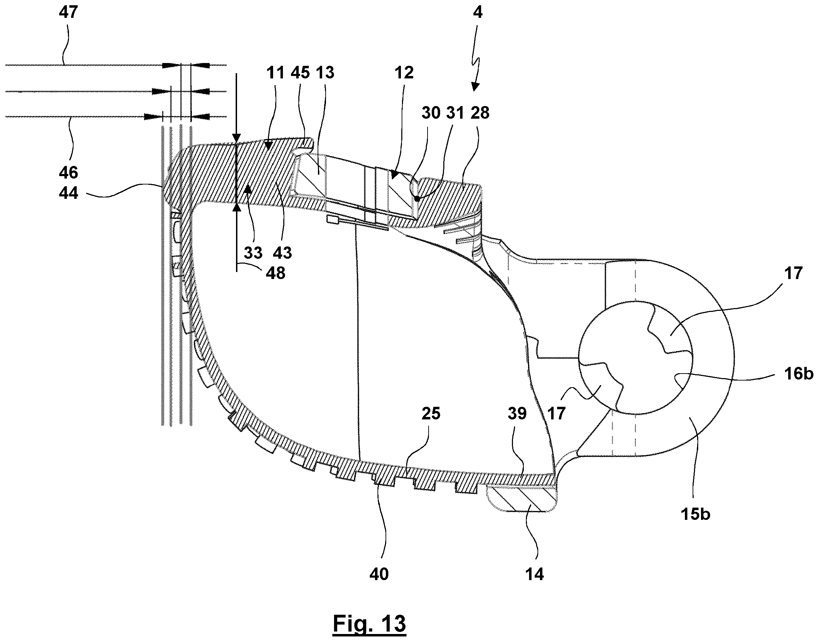

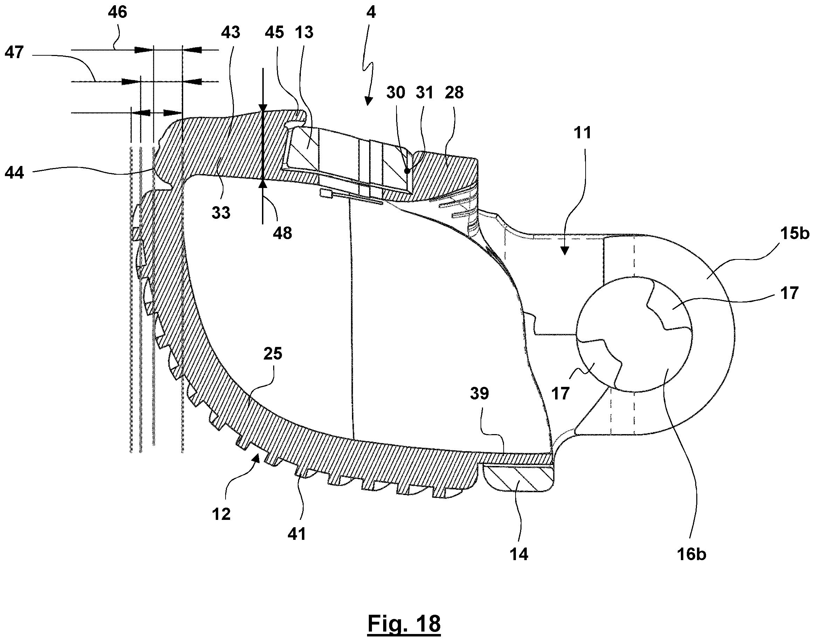

Vorzugsweise verfügt gemäß Fig. 13 und Fig. 18 ein Materialbereich 43 der Taststruktur 12 zwischen einer Spitze 44 und dem Anlagebereich an dem vorderen Endbereich 20 und/oder der Kopplungsabschnitt 21 der Taststruktur 12 über eine geringere Elastizität als zumindest ein Teilbereich des Grundkörpers 25 der Taststruktur 12 im Bereich einer Fingerkuppe des Fingergliedes. Dies kann, wie insbesondere in Fig. 13 zu erkennen ist, dadurch gewährleistet werden, dass in diesem Materialbereich 43 eine Wandstärke 48 der Taststruktur 12 größer ist als eine Wandstärke 47 in dem Bereich des Grundkörpers 25 im Bereich der Fingerkuppe, wobei vorzugsweise die Wandstärke 48 in dem Materialbereich 43 um einen Faktor von mindestens 2, mindestens 3 oder sogar mindestens 4 größer ist als die Wandstärke 47 des Grundkörpers 25 im Bereich der Fingerkuppe abseits der etwaigen Vorsprünge 40.

Des Weiteren ist in Fig. 13 und 18 zu erkennen, dass der Materialbereich 43 einen in proximaler Richtung überstehenden Sicherungsfortsatz 45 aufweist, der die proximale Begrenzung der Aufnahmenut 23 in montiertem Betriebszustand überragt, womit eine zusätzliche Sicherung der montierten Betriebsstellung gewährleistet wird.

Der versteifte Materialbereich 43 ermöglicht, dass mit dem Fingerexoskelett-Endglied 4 und dem darin angeordneten Fingerendglied Längskräfte mit einer hohen Steifigkeit über eine Spitze 44 auf einen zu montierenden oder anderweitig zu betätigenden oder zu drückenden Gegenstand aufgebracht werden können. Vorteilhaft ist hierbei, dass der vorderste Punkt der Innenfläche der Taststruktur 12 oder die Stirnseite 22 von der Spitze 44 einen Abstand 46 in Längsrichtung hat, der insbesondere kleiner ist als 10mm, vorzugsweise kleiner ist 9 mm, kleiner ist als 8 mm, kleiner ist als 6 mm oder sogar kleiner ist als 5,5 mm.

Im Bereich der Fingerkuppe kann die Wandstärke 47 des Grundkörpers 25 kleiner sein als 2,5 mm oder sogar kleiner sein als 1,8 mm, was vorzugsweise für die in den Fig. 1 bis 13 dargestellte Ausführungsform der Fall ist, wobei für eine andere Ausführungsform gemäß Fig. 14 bis 17, die Wandstärke 47 im Bereich des Grundkörpers 25 (abseits der Rippen 41) größer sein kann als 5 mm, größer sein kann als 6 mm oder sogar größer sein kann als 7 mm.

Für das montierte Fingerexoskelett-Endglied wird die Außenfläche vorzugsweise mit mindestens 30 %, mindestens 40 %, mindestens 50 %, mindestens 60 %, mindestens 70 %, mindestens 80 % oder sogar mindestens 85 % von der Taststruktur ausgebildet.

Möglich ist, dass in einem Set eine Stützstruktur 11 mit unterschiedlichen Taststrukturen 12 bereitgestellt wird. Beispielsweise kann in dem Set eine Taststruktur 12 gemäß Fig. 1 bis 13 sowie eine weitere Taststruktur 12 gemäß Fig. 14 bis 18 vorhanden sein. Hierbei können die Taststrukturen beispielsweise unterschiedliche Wandstärken 47 und unterschiedliche Vorsprünge 40 und/oder Rippen 41 aufweisen. Möglich ist auch, dass die unterschiedlichen Taststrukturen 12 angepasst sind für unterschiedliche Dicken oder Durchmesser der Fingerendlieder, indem beispielsweise für ein Fingerendglied mit einem kleineren Durchmesser eine größere Wandstärke verwendet wird oder Abstützpuffer vorgesehen sind. Für die vorliegenden Ausführungsbeispiele ist die Wandstärke 47 der Taststruktur 12 gemäß Fig. 1 bis 13 größer (insbesondere mindestens 1,5 mal größer oder mindestens 2,0 mal größer oder mindestens 3,0 mal größer) als die Wandstärke 47 der weiteren Taststruktur 12 gemäß Fig. 14 bis 18.

Für das dargestellte Ausführungsbeispiel erfolgt eine Sicherung der Taststruktur 12 an der Stützstruktur 11 in proximaler Richtung durch die Aufnahme des Vertikalschenkels 33 des Doppel-T-Kopfes 32 in der Aufnahmenut 23 und die Abstützung an der Stirnseite 22 des vorderen Endbereichs 20.

In distaler Richtung ist die Taststruktur 12 an der Stützstruktur 11 einerseits dadurch gesichert, dass der Querschnitt des Vertikalschenkels 33 ein Übermaß gegenüber der Verengung 24 aufweist, sodass für einen Austritt des Vertikalschenkels 33 aus der Aufnahmenut 23 eine elastische Komprimierung des Vertikalschenkels 33 erforderlich ist. Zusätzlich kann das Hintergreifen des Vorsprungs 28 eine Sicherung der Tragstruktur 12 gegen eine Bewegung in distaler Richtung gewährleisten. Des Weiteren ist wie beschrieben ein Ringsegmentabschnitt 39 der Taststruktur 12 zwischen dem Ring-Teilabschnitt 18a und dem Fingerglied verklemmt, sodass eine hier wirkende Reibung ebenfalls die Taststruktur 12 gegen eine Lösung von der Stützstruktur 11 in distaler Richtung sichert.

Alternativ oder kumulativ möglich ist, dass eine Sicherung der Taststruktur 12 an der Stützstruktur 11 in distaler Richtung dadurch erfolgt, dass ein weiterer Doppel-T-Kopf, insbesondere im proximalen Endbereich der Taststruktur 12, vorgesehen ist, der in eine weitere Aufnahmenut der Stützstruktur 11, die in proximaler Richtung offen ist, einführbar ist. Beispielsweise kann diese weitere Aufnahmenut in die Stirnfläche 31 der Stützstruktur 11 eingebracht sein, während dann der weitere Doppel-T-Kopf im Bereich des Vorsprungs 28 angeordnet sein kann. Entsprechend kann ein Doppel-T-Kopf auch den Ring-Teilabschnitt 18a hintergreifen und in eine in proximaler Richtung offene Aufnahmenut des Ring-Teilabschnitts 18a eingreifen.

### BEZUGSZEICHENLISTE

- 1: Fingerexoskelett
- 2: Daumenexoskelett
- 3: Fingerexoskelett-Glied
- 4: Fingerexoskelett-Endglied
- 5: Schwenklager
- 6: Schwenkachse
- 7: Schwenklager
- 8: Schwenkachse
- 9: Aufnahme
- 10: Ausnehmung
- 11: Stützstruktur
- 12: Taststruktur
- 13: Nagelbettabschnitt
- 14: Ringabschnitt
- 15: Lageraugenabschnitt
- 16: Lagerauge
- 17: Anschlag
- 18: Ring-Teilabschnitt
- 19: Neigungswinkel
- 20: vorderer Endbereich
- 21: Kopplungsabschnitt
- 22: Stirnseite
- 23: Aufnahmenut
- 24: Verengung
- 25: Grundkörper
- 26: Fingerspitzenabschnitt
- 27: Kopplungsabschnitt
- 28: Vorsprung
- 29: Durchgangsschlitz
- 30: Stirnfläche
- 31: Stirnfläche
- 32: Doppel-T-Kopf
- 33: Vertikalschenkel
- 34: Horizontalschenkel
- 35: Seitenwand
- 36: Kopplungsraum
- 37: Stirnwand
- 38: Zunge
- 39: Ringsegmentabschnitt
- 40: Vorsprung
- 41: Rippe
- 42: Rippenabschnitt
- 43: Materialbereich
- 44: Spitze
- 45: Sicherungsfortsatz
- 46: Abstand
- 47: Wandstärke
- 48: Wandstärke

## Patentansprüche

1. Fingerexoskelett-Endglied (4) mit
a) einer Stützstruktur (11), die
aa) einen Nagelbettabschnitt (13), der so ausgebildet ist, dass der Nagelbettabschnitt (13) bei an einem Fingerendglied angelegtem Fingerexoskelett-Endglied (4) oberhalb des Nagelbettes des Fingerendglieds angeordnet ist, und
ab) einen Ringabschnitt (14), der so ausgebildet ist, dass der Ringabschnitt (14) bei an dem Fingerendglied angelegtem Fingerexoskelett-Endglied (4) das Fingerendglied umschließt,
aufweist, und
b) einer Taststruktur (12),
**dadurch gekennzeichnet, dass**
c) die Taststruktur (12)
ca) einen Fingerspitzenabschnitt (26) aufweist, welcher in proximaler Richtung an einem vorderen Endbereich (20) des Nagelbettabschnitts (13) der Stützstruktur (11) abgestützt ist, und/oder
cb) einen Doppel-T-Kopf (32) aufweist, der in eine Aufnahmenut (23) der Stützstruktur (11) einschiebbar ist.

2. Fingerexoskelett-Endglied (4) nach Anspruch 1, wobei der Fingerspitzenabschnitt (26) der Taststruktur (12) einen Kopplungsabschnitt (27) aufweist, der mit einem Kopplungsabschnitt (21) der Stützstruktur (11) gekoppelt ist, wobei der Kopplungsabschnitt (21) der Stützstruktur (11) von dem vorderen Endbereich (20) des Nagelbettabschnitts (13) der Stützstruktur (11) ausgebildet ist.

3. Fingerexoskelett-Endglied (4) nach Anspruch 2, wobei der Kopplungsabschnitt (27) des Fingerspitzenabschnitts (26) der Taststruktur (12) einen Doppel-T-Kopf (32) aufweist, wobei vorzugsweise die Enden von Horizontalschenkeln (34) des Doppel-T-Kopfes (32) über Seitenwände (35) miteinander verbunden sind.

4. Fingerexoskelett-Endglied (4) nach Anspruch 2 oder 3, **wobei** der Kopplungsabschnitt (21) des Nagelbettabschnitts (13) der Stützstruktur (11) eine in distale Richtung offene Aufnahmenut (23) aufweist.

5. Fingerexoskelett-Endglied (4) nach Anspruch 4 in Rückbeziehung auf Anspruch 3, **wobei** der Doppel-T-Kopf (32) der Taststruktur (12) in proximale Richtung in die Aufnahmenut (23) der Stützstruktur (11) einschiebbar ist, womit der Nagelbettabschnitt (13) des Stützstruktur (11) im Umgebungsbereich der Aufnahmenut (23) zwischen den beiden Horizontalschenkeln (34) des Doppel-T-Kopfes (32) der Taststruktur (12) gefangen ist.

6. Fingerexoskelett-Endglied (4) nach Anspruch 5, **wobei** der Nagelbettabschnitt (13) der Stützstruktur (11) beidseits der Aufnahmenut (23) Zungen (38) aufweist, die jeweils in Kopplungsräumen (36) der Taststruktur (12) aufgenommen sind, die durch die beiden Horizontalschenkel (34) des Doppel-T-Kopfes (32), eine Seitenwand (35) und einen Vertikalschenkel (33) des Doppel-T-Kopfes (32) begrenzt sind.

7. Fingerexoskelett-Endglied (4) nach einem der Ansprüche 2 bis 6, **wobei** die Taststruktur (12) einen Vorsprung (28) aufweist, welcher eine in proximale Richtung weisende Stirnfläche (31) des Nagelbettabschnitts (13) der Stützstruktur (11) hintergreift, so dass der Nagelbettabschnitt (13) in Richtung der Längsachse zwischen dem Kopplungsabschnitt (27) der Taststruktur (12) und dem Vorsprung (28) der Taststruktur (12) gefangen ist.

8. Fingerexoskelett-Endglied (4) nach einem der vorhergehenden Ansprüche, **wobei** in einer Draufsicht die Taststruktur (12) zumindest in eine laterale Richtung gegenüber der Stützstruktur (11) übersteht.

9. Fingerexoskelett (1) mit einem Fingerexoskelett-Endglied (4) nach einem der vorhergehenden Ansprüche, **wobei** das Fingerexoskelett-Endglied (4) über ein Schwenklager mit einem weiteren Fingerexoskelett-Glied verbunden ist.

10. Set mit einem Fingerexoskelett-Endglied (4) nach einem der Ansprüche 2 bis 8 und einer weiteren Taststruktur (12), **wobei** die Taststruktur (12) des Fingerexoskelett-Endglieds (4) und die weitere Taststruktur (12)
a) gleiche Kopplungsabschnitte (27), aber
b) unterschiedliche Steifigkeiten und/oder unterschiedliche Formen und/oder Größen aufweisen und für unterschiedliche Anwendungen bestimmt sind.
